# EUROPEAN PATENT APPLICATION

(11) **EP 2 876 861 A1**
(43) Date of publication of application: **27.05.2015**
(21) Application number: 14194545.1
(22) Date of filing: 24.11.2014
(51) Int. Cl.: H04L 29/06, G06Q 50/00, H04L 12/58

(54) **Apparatus and method for managing social activity relating to communication service in communication system**

(30) Priority: 22.11.2013 KR 20130143144
(71) Applicant: Samsung Electronics Co., Ltd, Gyeonggi-do 443-742 (KR)
(72) Inventor: Oh, Gyu-Bong, Gyeonggi-do (KR); Lee, Kyung-Tak, Gyeonggi-do (KR); Choi, Jong-Soo, Gyeonggi-do (KR)
(74) Representative: Nederlandsch Octrooibureau

(57) **Abstract**

An operation method of a user device in a communication system is provided, which includes receiving a notification of update of session-related contents from a server, and storing information about the session-related contents. The notification is provided by a user preference of the user device.

## Description

### BACKGROUND OF THE INVENTION

### 1. Field of the Invention

The present invention generally relates to a communication service.

### 2. Description of the Related Art

Immersive Social Centre (ISC) service aims to provide an immersive experience in the form of converging content viewing and communication between users. The ISC service is a next-generation communication service capable of providing more immersive content viewing between the users and a communication experience, in a converged form. Also, Telepresence (TP) service aims to provide a user experience as if users are in the same place through a plurality of video/voice exchanges between the users.

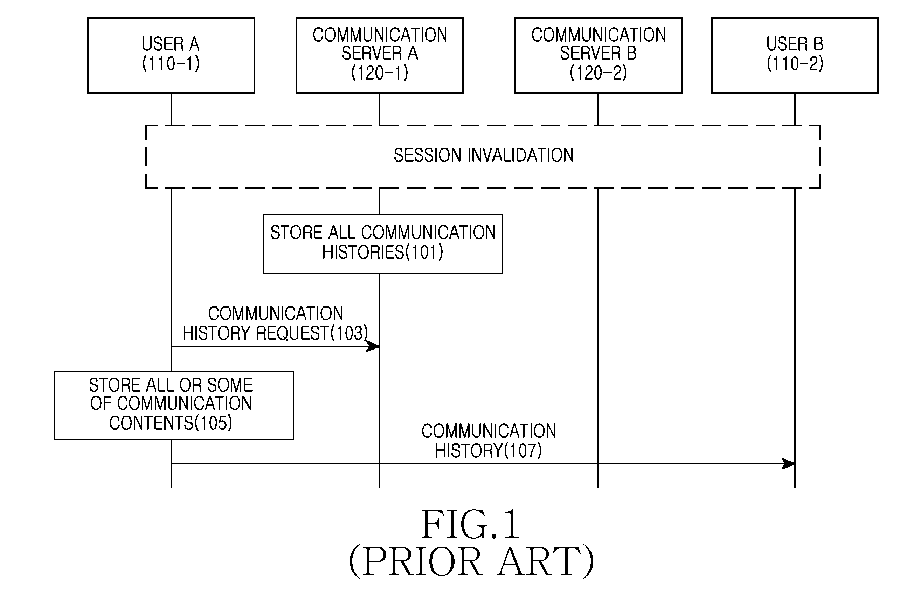

FIG. 1 illustrates a signal exchange for a user's social activity management in a conventional communication service. Referring to FIG. 1, in the conventional communication service, if a session between a user A 110-1 and a user B 110-2 is invalidated, a communication server A 120-1 stores all communication histories in step 101. If the user A 110-1 requests the communication history to the communication server A 120-1 in step 103, in step 105, in response to the request, the user A 110-1 can store all or some of contents related to a received communication session. In step 107, the user A 110-1 transmits the communication history to the user B 110-2.

As described above, if a session is invalidated, users can request contents relating to a joined communication session to a corresponding server and store all or some of received contents in a terminal, or can receive communication contents from a corresponding communication server and store all or some of the received communication contents in the terminal in a like manner. At this time, it may be difficult to distinguish contents desired by a user from a plurality of possessed contents.

The conventional communication service provides no definition for a method for a participant's social activity management, a method for social activity delivery between users and the like. Accordingly, it is inconvenientfor a user to directly request corresponding information to a communication server. Also, there it is inconvenient for the user to directly register detailed information about corresponding contents. Further, there still remains an inconvenience that, though getting contents related to a corresponding session from the communication server, the user has to directly register detailed information about the contents.

### SUMMARY OF THE INVENTION

The present invention has been made to address at least the above mentioned problems and/or disadvantages and to provide at least advantages described below. Accordingly, an aspect of the present invention provides an apparatus and method for managing a social activity in a communication service.

Another aspect of the present invention provides an apparatus and method for storing contents associated with a session in a communication service.

Another aspect of the present invention provides an apparatus and method for sharing contents associated with a session in a communication service.

Another aspect of the present invention provides an apparatus and method for using user preference information instructing to process contents associated with a session in a communication service.

In accordance with an aspect of the present invention, a method for operating a user device in a communication system is provided, which includes receiving a notification of update of session-related contents from a server, and storing information about the session-related contents. The notification is provided by a user preference of the user device.

In accordance with another aspect of the present invention, a method for operating a server in a wireless communication system is provided, which includes generating session-related contents based on a predefined user preference of a first user, and transmitting information about the session-related contents in order to share the session-related contents with a second user.

In accordance with another aspect of the present invention, a method for operating a server in a wireless communication system is provided, which includes receiving a request of information about a user preference; and providing the information about the user preference. The information about the user preference instructs at least one of whether to generate session-related contents of a user, whether to share the session-related contents, and a target for sharing the session-related contents.

In accordance with another aspect of the present invention, a method for operating a server in a wireless communication system is provided, which includes receiving information about session-related contents of a first user in order to share the session-related contents of the first user with a second user, and processing the information about the session-related contents of the first user based on a user preference of the second user.

In accordance with another aspect of the present invention, an apparatus for a user device in a communication system is provided, which includes a communication unit configured to receive a notification of update of session-related contents from a server, and a control unit configured to store information about the session-related contents. The notification is provided by a user preference of the user device.

In accordance with another aspect of the present invention, an apparatus for a server in a wireless communication system is provided, which include a control unit configured to generate session-related contents based on a user preference of a first user, and a communication unit configured to transmit information about the session-related contents in order to share the session-related contents with a second user.

In accordance with another aspect of the present invention, an apparatus for a server in a wireless communication system is provided, which includes a communication unit configured to receive a request of information about a user preference, and a control unit configured to provide the information about the user preference. The information about the user preference instructs at least one of whether to generate session-related contents of a user, whether to share the session-related contents, and a target for sharing the session-related contents.

In accordance with another aspect of the present invention, an apparatus for a server in a wireless communication system is provided, which includes a communication unit configured to receive information about session-related contents of a first user in order to share the session-related contents of the first user with a second user, and a control unit configured to process the information about the session-related contents of the first user based on a user preference of the second user.

### BRIEF DESCRIPTION OF THE DRAWINGS

The above and other aspects, features and advantages of the present invention will become more apparent from the following detailed description, when taken in conjunction with the accompanying drawings, in which:
FIG. 1 illustrates a signal exchange for user's social activity management in a conventional communication service;
FIG. 2 illustrates a conceptual structure of a system providing a communication service according to an embodiment of the present invention;
FIG. 3 illustrates a signal exchange for social activity management in a system providing a communication service according to an embodiment of the present invention;
FIG. 4 illustrates a signal exchange for social activity management in a system providing a communication service according to another embodiment of the present invention;
FIG. 5 illustrates a signal exchange for social activity management in a system providing a communication service according to yet another embodiment of the present invention;
FIG. 6 illustrates an operation procedure of a user device in a system providing a communication service according to an embodiment of the present invention;
FIG. 7 illustrates an operation procedure of a transmission-side server in a system providing a communication service according to an embodiment of the present invention;
FIG. 8 illustrates an operation procedure of a document management server in a system providing a communication service according to an embodiment of the present invention;
FIG. 9 illustrates an operation procedure of a reception-side server in a system providing a communication service according to an embodiment of the present invention;
FIG. 10 illustrates a block configuration of a user device providing a communication service according to an embodiment of the present invention; and
FIG. 11 illustrates a block configuration of a server in a system providing a communication service according to an embodiment of the present invention.

### DETAILED DESCRIPTION OF EMBODIMENTS OF THE PRESENT INVENTION

Certain embodiments of the present invention will be described herein below with reference to the accompanying drawings. In describing the present invention, well-known functions or constructions are not described in detail since they would obscure the invention in unnecessary detail. Further, terms described below, which are defined considering functions in the present invention, can be modified in accordance with a user and operator's intention or practice. Therefore, the definition should be given on the basis of the content throughout the present specification.

Various embodiments of the present invention describe a technology for providing a method for managing joined session (i.e., event) - related contents of an Immersive Social Centre (ISC) user, thereby providing the user with main functions for more smooth Social Experience (SE).

The present invention relates to a method for providing a method for, based on a user preference, managing contents related to a communication and content viewing session joined by an ISC user between users, thereby providing the user with main functions for more smooth social user experience.

Various embodiments of the present invention can satisfy the requirements such as Table 1 as shown below. The current immersive social service standard proposes the requirements of Table 1 in a portion for social activity management.

**Table 1**

| Label | Description | Enabler Release |
|---|---|---|
| ISC-SOC-001 | The ISC Enabler SHALL support social activity (e.g. send invitation, request to join, content sharing) between ISC Users, subject to the user preferences and the service provider policy. | ISC V1.0 |

An embodiment of the present invention can provide a data transmission/reception method and system for providing a communication service at high speed without the waste of resource, power and memory in a communication system supporting communication services of various forms.

An embodiment of the present invention can provide a data transmission/reception method and system for providing an ISC service to a user in a communication system.

An embodiment of the present invention can provide a data transmission/reception method and apparatus in which a social experience service is easily and quickly possible based on user's intention selection by providing a method for, based on a user preference, managing contents related to an ISC session joined by an ISC user of a social experience system.

Various embodiments of the present invention can provide a user with main functions for more smooth social experience by a method for, based on a user preference, managing contents related to an ISC session joined by an ISC user.

An embodiment of the present invention can provide a user with a main function for more smooth social experience by providing a method for, when an ISC user intends to receive contents related to a joined ISC session, if an ISC server stores the ISC session contents in an ISC Database (DB) server based on session context based on a user preference and notifies an ISC client of this, the ISC user selectively stores the ISC session contents in a user device, and, when synchronization with the server is achieved, the corresponding server distinctively transmits newly generated ISC session contents to other ISC session participants based on the user preference and a reception-side ISC user receives this based on the user preference and shares a social activity between ISC users.

In certain embodiments of the present invention, the following items are taken into consideration.
1) The ISC user presets a user preference for social activity management.
2) The ISC user presets a user preference for storing a conversation history.
3) The ISC user previously requests a subscription to a change of generated ISC session contents.
4) The ISC client understands an extensible Markup Language (XML) structure schema within the ISC DB server.

Various embodiments of the present invention relate to methods for social activity management. In detail, various embodiments of the present invention propose a method for social activity management by a user after ISC session invalidation and a method for social activity management by an ISC server during ISC session proceeding.

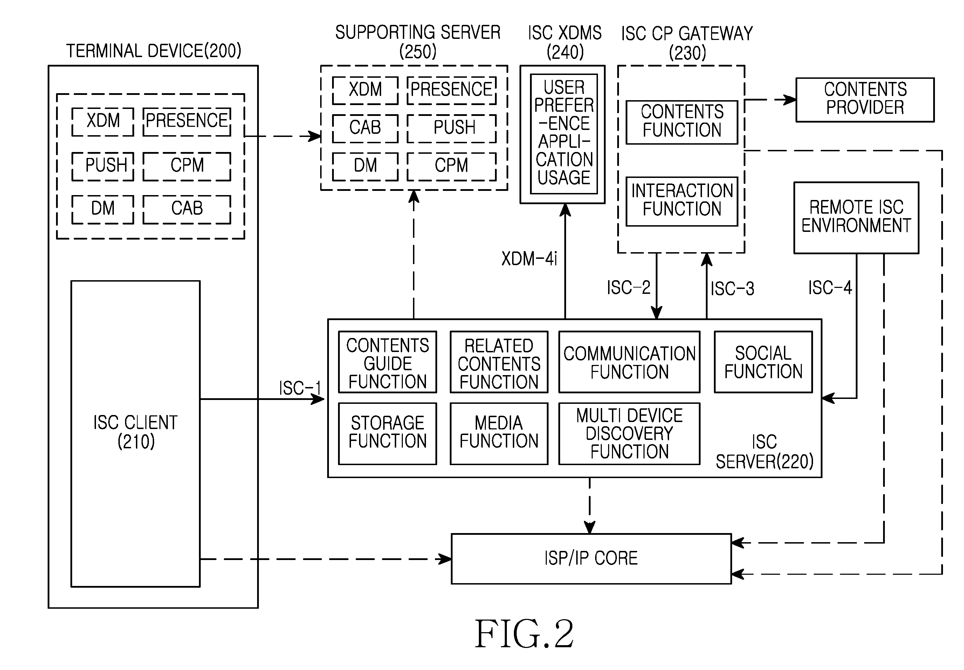

FIG. 2 illustrates a conceptual structure of a system for providing a communication service according to an embodiment of the present invention.

Referring to FIG. 2, the system includes an ISC client 210, an ISC server 220, an ISC Content Provider (CP) gateway 230, an ISC XML Document Management Server (XDMS) 240, and a supporting server 250.

The ISC client 210 is included in a user device 200, and performs communication with the ISC server 220. The ISC client 210 performs communication through a Session Initiation Protocol (SIP) / Internet Protocol (IP) core or directly with other objects (e.g., the ISC server 220, the ISC CP gateway 230, a remote ISC environment, and the like).

The ISC client 210 transmits the ISC server 220 a request of ISC client 210 and ISC user registration, communication of ISC users (e.g., chatting message / file transmission/reception and the like), a function related to a content viewing group, that is, a group which views contents together (e.g., viewing participant addition/deletion, and the like), contents viewing synchronization, user device capability search, contents viewing information management, media contents reception/management, contents list (e.g., live/non-live contents, user-generated contents, contents preview) management, associated contents management, an immersive experience related function (e.g., spatial configuration, continuous content viewing and the like), media communication (e.g., media plane communication), and the like. Also, the ISC client 210 transmits XML document management, presence information management, push message management, converged IP messaging management, device management, converged address book management, and the like, to the supporting server 250 in the ISC device itself.

The ISC server 220 is one of network constituent elements for an ISC service. The ISC server 220 receives a request of an ISC user from the ISC client 210, and processes the received request. A main function of the ISC server 220 includes ISC client 210 registration / mutual authentication, contents guide arrangement, primary content and associated content connection and transmission, contents storage and management, multiple device management, contents viewing session and communication session management, contents distribution, social interaction, immersion delivery, and the like.

The ISC CP gateway 230 makes real-time or non-real-time communication possible between an ISC user and a content provider. Also, the ISC CP gateway 230 provides media contents of content viewing or continuous content viewing from the content operator to the ISC server 220.

The ISC XDMS 240 manages ISC user preference application usage. For example, the ISC XDMS 240 stores information representing a preference of an ISC user regarding social relation setting for a communication session, conversation history storage and sharing, intention delivery, and the like. Also, the ISC XDMS 240 provides the information representing the preference of the ISC user based on a request of the ISC server 220.

The supporting server 250 performs a function of XML Document Management (XDM) for accessing various application usage functions excepting the preference, presence (PRS) for presence information management, PUSH for push message management, Converged IP Messaging (CPM) for converged messaging management, Device management (DM) for device management, a Converged Address Book (CAB) for converged address book management, and the like. That is, the supporting server 250 stores contents of a message transmitted/received between users through a communication session, a file, and the like.

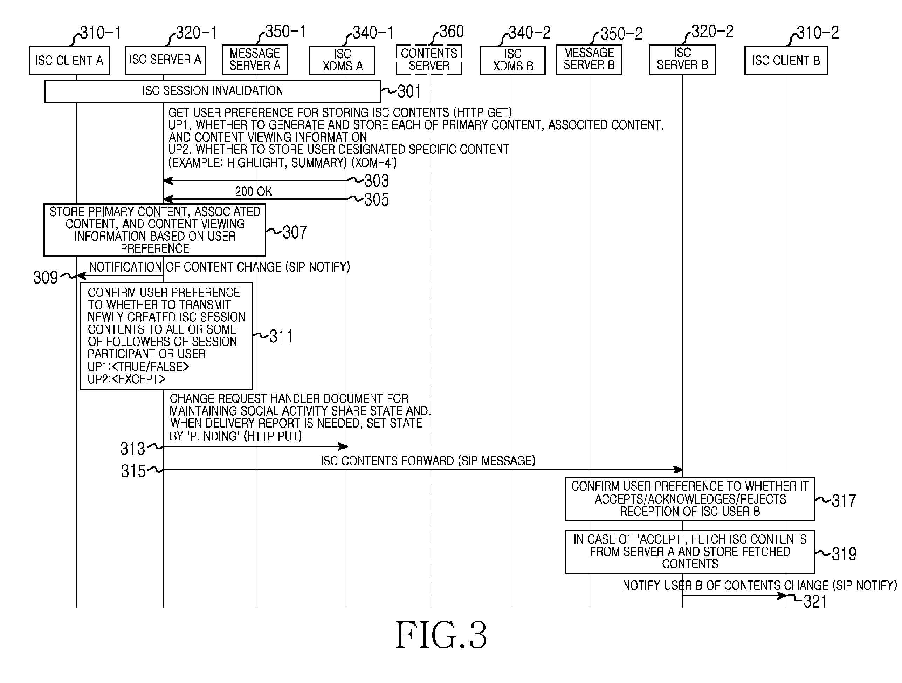

FIG. 3 illustrates a signal exchange for social activity management in a system providing a communication service according to an embodiment of the present invention. FIG. 3 illustrates an embodiment for social activity management between two users after ISC session invalidation by conferencing that there is an ISC service.

Referring to FIG. 3, in step 301, an ISC session is invalidated.

After the ISC session invalidation, in step 303, an ISC server A 320-1 gets a user preference (UP1) regarding whether to generate ISC session contents for conference-related context, from an ISC XDMS A 340-1. For example, the conference-related context includes conference schedule / opening information, participant information (e.g., acceptable personal information, join level information, main join field information, and the like), other conference related information, and the like. Additionally, when an ISC user sets a specific context requested by the user, for example, a detailed user preference (UP2) regarding such as inspection/audience view (e.g., "zone A" view) that the user selects in an ISC session, the ISC server A 320-1 confirms the detailed user preference. An example of the user preference is recorded in a form of Table 2 as shown below.

**Table 2**

| |
|---|
| <isc-upp xmlns="urn:oma:xml:isc:user-prefs"> |
| <isc-upp-set> |
| <profile id="1234"> |
| <display-name>MyISCPreferences</display-name> |
| <isc-up-01>true</isc-up-01> |
| <isc-up-02>true</isc-up-02> |
| ... |
| ... |
| <store-contents> |
| <primary-content>true</primary-content> |
| <associated-content type="highlight">true</associated-content> |
| <content-viewing-info>true</content-viewing-info> |
| </store-contents> |
| <send-prefs> |
| <send-social-activity>true</send-social-activity> |
| <cp:rule id="gb5223"> |
| <cp:conditions> |
| <ocp: external-list> |
| <ocp:entry anc="http://xcap. example.org/resource-list/users/sip:bjp@example.com/index/∼∼/resource-lists/list%5B@name=%22black-list%22%5D"/> |
| </ocp:external-list> |
| </cp:conditions> |
| <cp:actions> |
| <reject/> |
| </cp:actions> |
| cp:rule> |
| </send-prefs> |
| ... |
| ... |
| </profile |
| </isc-upp-set> |
| <isc-upp> |

Elements included in the user preference shown in Table 2 are defined as follows.
<store-contents>: upper element for storage or non-storage.
<primary-content>: primary content storage or non-storage.
<associated_content>: associated content storage or non-storage, and a 'type' attribute that indicates user-designated specific contents storage or non-storage (e.g., highlight, summary).
<content-viewing-info>: content viewing information (contents metadata (i.e., a status, a required time, and the like)) storage or non-storage.
<send-prefs>: preference regarding social activity transmitting.
<send-social-activity>: social activity transmitting or non-transmitting
<rule>: indication of a target/non-target for transmission of social activity related information.

In step 305, the ISC server A 320-1 receives a 200 OK from the ISC XDMS A 340-1. In the embodiment of FIG. 3, a description has been made in which the ISC server A 320-1 gets information about the user preference in step 303. But, based on another embodiment of the present invention, the ISC server A 320-1 gets the information about the user preference in step 305.

In step 307, the ISC server A 320-1 generates and stores ISC session contents based on the user preference. For example, the ISC session contents include at least one of primary contents, associated contents, and content viewing information. And, the ISC server A 320-1 sets a tag and a per-individual-content identifier (e.g., Unique Resource Identifier (URI)) that are recognition values for the generated ISC session contents. For example, the recognition value is set as 'social event 20111006 zone A'. In the embodiment of FIG. 3, a description has been made in which the ISC session contents are stored in the ISC server A 320-1. But, based on another embodiment of the present invention, the ISC session contents are stored in a message server A 350-1, the ISC XDMS A 340-1 or a contents server 360, not the ISC server A 320-1.

In step 309, the ISC server A 320-1 notifies an ISC client A 310-1 of a change (i.e., update) of the ISC session contents. For example, the ISC server A 320-1 notifies the change of the ISC session contents through a SIP NOTIFY message. For this, the ISC server A 320-1 transmits to the ISC client A 310-1 a reference (e.g., a URI) to the stored content of generated ISC session contents or the contents themselves. In accordance with this, the ISC client A 310-1 stores the reference to the contents or the contents themselves within a user device. Further, if contents synchronization between the ISC client A 310-1 and the ISC server A 320-1 is supported, the synchronization is carried out.

In step 311, the ISC server A 320-1 confirms a user preference to whether to transmit the newly generated ISC session contents to recipients according to a condition previously designated by the user. In other words, the ISC server A 320-1 confirms the user preference regarding whether to transmit the newly generated ISC session contents to all or some of followers of a session participant or user. As shown in Table 2, the preference (e.g., <send-social-activity>) regarding whether to transmit a social activity to other users and the target for transmission of the new generated ISC session contents may be designated. For example, the contents may be transmitted to all or some of subscribers of the ISC client A 310-1, or to only to an ISC user who has actually joined the ISC session among the subscribers. The target for contents transmission may be previously designated by the user. The embodiment illustrated in FIG. 3 above assumes that the social activity is transmitted to other users (e.g., when <send-social-activity> is 'true'), and the ISC user does not transmit the social activity to a limited recipient. Information about the limited recipient may be managed as a black-list. Further, though not indicated in the user preference, a user may intend to transmit to other users a session history including a conversation and message generated in a corresponding session, together with the ISC session contents. In this case, an item for transmission of the session history including the conversation and the message is added to the user preference. The session history including the conversation and the message may be added to a message body in step 315.

In step 313, the ISC server A 320-1 generates and transmits, to the ISC XDMS A 340-1, a request handler document for state management of a social activity share request, and, when a delivery report is needed, the ISC server A 320-1 indicates its state by 'pending'. In other words, the ISC server A 320-1 changes the request handler document for maintaining the social activity share state, and, when the delivery report is needed, the ISC server A 320-1 sets the state by 'pending'. An example of a schema for the request handler document is illustrated in Table 3 as shown below.

**Table 3**

| |
|---|
| <isc-request id="123qwe"> |
| <social-activity-share-req> |
| <recipients-list> |
| <entry uri="sip:alice@example.com"/> |
| <entry uri="sip:aks@example.com"/> |
| </recipients-list> |
| <note>social activity share for Las Vegas meeting 20131121 </note> |
| <delivery-report>true</delivery-report> |
| <response>pending</response> |
| <request-id>cdcd3434</request-id> |
| <send-contents> |
| <primary-content>resource-lists/users/sip:joe@foo.com/pcontents</primary-content> |
| <associated-content>resource-lists/users/sip:joe@foo.com/acontents</associated-content> |
| </store-contents> |
| </social-activity-share-req> |
| </isc-request> |

Elements included in the request handler document for the state management of the social activity share request shown in Table 3 are defined as follows.
<isc-request>: ISC related request.
<social-activity-share-req>: social activity share request.
<recipients-list>: recipient list, including two users herein.
<note>: indicating that it is social activity share and herein indicating in a form 'social activity share for LasVegas meeting 20131121'.
<delivery-report>: request for reception of delivery result for a social activity share request ('true').
<response>: a recipient's response state to a social activity share request and it is currently a state of having not yet received a response.
<request-id>: identifier of a social activity share request.
<send-contents>: send-contents for a social activity share request, and each can include primary content, associated content, and content viewing information. In the present embodiment, it indicates URI information of the primary content and the associated content.

Further, when intending to provide newly generated ISC session contents to a recipient who is not an ISC user, in other words, to a non-ISC user, the ISC server A 320-1 converts the corresponding contents in a message form (e.g., an SMS, an MMS, an e-mail, and the like) and transmits the corresponding contents of the ISC client A 310-1 to the non-ISC recipient. In this case, the <delivery-report> and the <response> are excluded from the request handler document, based on an implementation of system for social activity share request message delivery.

In step 315, the ISC server A 320-1 transmits a social activity share request for ISC session contents transmitting, to a recipient side. In other words, the ISC server A 320-1 forwards the ISC session contents. For this, a SIP MESSAGE message is used. For example, the ISC server A 320-1 includes ISC session contents data of the ISC client A 310-1 directly in the social activity share request, or includes the ISC session contents data in an identifiable document URI form. Further, the recipient may generate the social activity share request in a similar form being in the same domain or a different domain. But, when the recipient is the same domain, unlike the embodiment of FIG. 3, a reception entity of a social activity transmit request is the recipient of the corresponding contents, not the counterpart ISC server A 320-1. An example of a SIP MESSAGE message body for the social activity share request is illustrated in Table 4 as shown below.

**Table 4**

| |
|---|
| <request> |
| <forward> |
| <note>social activity share for Las Vegas meeting 20131121</note> |
| <delivery-report>true</delivery-report> |
| <request-id>cdcd3434</request-id> |
| <send-contents> |
| <primary-content>resource-lists/users/sip:joe@foo.com/pcontents</primary-content> |
| <associated-content>resource-lists/users/sip:joe@foo.com/acontents</associated-content> |
| </store-contents> |
| </forward> |
| </request> |

Elements included in the SIP MESSAGE message body for the social activity share request shown in Table 4 are defined as follows.
<note>: indicating that it is social activity share and indicating herein in a form 'social activity share for Las Vegas meeting 20131121'.
<delivery-report>: request for reception of delivery result for a social activity share request ('true').
<request-id>: identifier of a social activity share request.
<send-contents>: send-contents for a social activity share request, and each can include primary content, associated content, and content viewing information. In the present embodiment, it indicates URI information of primary content and associated content. In accordance with a user's preference, specific contents for the transmitted social activity share request are possible to be applied to a filter excepting for the social activity share request.

In step 317, the ISC server B 320-2 having received the social activity share request confirms a user preference regarding ISC session contents reception of the ISC client B 310-2. That is, the ISC server B 320-2 confirms the user preference regarding whether to accept/receive/acknowledge/reject the reception of the ISC client B 310-2. The user preference may be one of accepting server change information after storing received data in a server, finally storing (confirming) in the server through a user's acceptance after temporarily storing in the server, and rejecting a corresponding social relation. The embodiment illustrated in FIG. 3 illustrates a case of 'accept'.

In step 319, based on the user preference of the ISC client B 310-2, the ISC server B 320-2 temporarily stores data included in the social activity share request in the ISC server B 320-2, or fetches the ISC session contents of the ISC client A 310-1 from the transmitting-side ISC server A 320-1 based on a document URI, stores the fetched ISC session contents in a reception-side ISC DB, and sets a contents delivery state as 'changed' (e.g., 'updated') in a place such as a list XDMS. As another example, if the user preference is 'acknowledge' (i.e., confirm), the ISC server B 320-2 notifies a user of the content of the ISC session contents, receives an acceptance of the ISC client B 310-2 in response to this, and gets and stores the corresponding contents from the transmitting-side ISC server A 320-1. Alternatively, like the 'accept' case, the ISC server B 320-2 fetches the corresponding contents from the transmitting-side ISC server A 320-1, temporarily stores the fetched contents, acknowledges the corresponding contents from the ISC client B 310-2, and stores the corresponding contents as formal data. As yet another example, if the user preference is 'reject', the ISC server B 320-2 transmits an error message to a transmitting side. The error message represents non-acceptance of a recipient.

In step 321, the ISC server B 320-2 transmits a contents change item of the ISC server A 320-1 to the ISC client B 310-2. For example, the ISC server B 320-2 transmits a change item of the ISC session contents through a SIP NOTIFY message. A user of the ISC client B 310-2 having received the content change item stores the contents within a user device. If contents synchronization between the ISC client B 310-2 and the ISC server B 320-2 is supported, the synchronization is carried out by the ISC server B 320-2. Further, if intending to transmit newly generated ISC session contents to the recipient who is the non-ISC user, not the ISC user, the ISC server A 320-1 transmits contents of the ISC client A 310-1 to the non-ISC recipient through a message form (e.g., an SMS, an MMS, an e-mail, and the like).

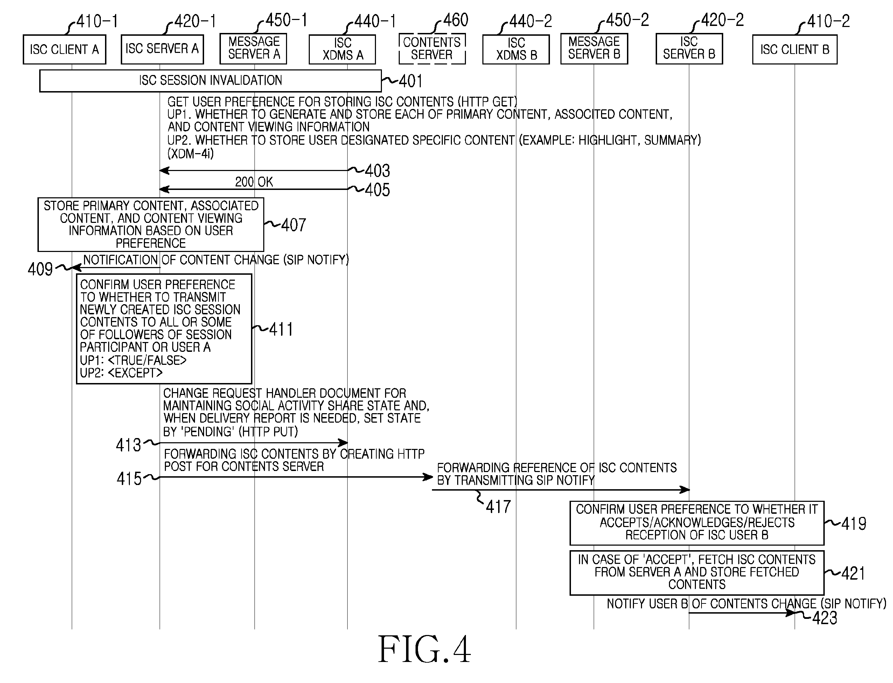

FIG. 4 illustrates a signal exchange for social activity management in a system providing a communication service according to another embodiment of the present invention. FIG. 4 represents an embodiment in which ISC session contents are provided through a contents server 460.

Referring to FIG. 4, in step 401, an ISC session is invalidated.

After the ISC session invalidation, in step 403, an ISC server A 420-1 gets a user preference regarding whether to generate ISC session contents for conference-related context, from an ISC XDMS A 440-1. For example, the conference-related context includes conference schedule/opening information, participant information (e.g., acceptable personal information, join level information, main join field information, and the like), other conference related information, and the like. Additionally, when an ISC user sets a specific context requested by the user, for example, a detailed user preference regarding such as inspection/audience view (e.g., "zone A" view) that the user selects in an ISC session, the ISC server A 420-1 confirms the detailed user preference. An example of the user preference is recorded in a form of Table 2 above.

In step 405, the ISC server A 420-1 receives a 200 OK from the ISC XDMS A 440-1.

In step 407, the ISC server A 420-1 generates and stores ISC session contents based on the user preference. For example, the ISC session contents include at least one of primary contents, associated contents, and content viewing information. And, the ISC server A 420-1 sets a tag and a per-individual-content identifier (e.g., Unique Resource Identifier (URI)) that are recognition values for the generated ISC session contents. For example, the recognition value is set as 'social event 20111006 zone A'. In the embodiment of FIG. 4, a description has been made in which the ISC session contents are stored in the ISC server A 420-1. But, based on another embodiment of the present invention, the ISC session contents are stored in a message server A 450-1, the ISC XDMS A 440-1 or a contents server 460, not the ISC server A 420-1.

In step 409, the ISC server A 420-1 notifies an ISC client A 410-1 of a change (i.e., update) of the ISC session contents. For example, the ISC server A 420-1 notifies the change of the ISC session contents through a SIP NOTIFY message. For this, the ISC server A 420-1 transmits to the ISC client A 410-1 a reference (e.g., a URI) to the stored content of generated ISC session contents or the contents themselves. In accordance with this, the ISC client A 410-1 stores the reference to the contents or the contents themselves within a user device. Further, if contents synchronization between the ISC client A 410-1 and the ISC server A 420-1 is supported, the synchronization is carried out.

In step 411, the ISC server A 420-1 confirms a user preference regarding whether to transmit the newly generated ISC session contents to recipients according to a condition previously designated by the user. In other words, the ISC server A 420-1 confirms the user preference regarding whether to transmit the newly generated ISC session contents to all or some of followers of a session participant or user. As shown in Table 2, the preference (e.g., <send-social-activity>) regarding whether to transmit a social activity to other users and the target for transmission of the new generated ISC session contents may be designated. For example, the contents may be transmitted to all or some of subscribers of the ISC client A 410-1, or to only to an ISC user who has actually joined the ISC session among the subscribers. The target for contents transmission may be previously designated by the user. The embodiment illustrated in FIG. 4 above assumes that the social activity is transmitted to other users (e.g., when <send-social-activity> is 'true'), and the ISC user does not transmit the social activity to a limited recipient. Information about the limited recipient may be managed as a black-list. Further, though not indicated in the user preference, the user may intend to transmit to other users a session history including a conversation and message generated in a corresponding session, together with the ISC session contents. In this case, an item for transmission of the session history including the conversation and the message is added to the user preference. The session history including the conversation and the message may be added to a message body in step 415.

In step 413, the ISC server A 420-1 generates and transmits, to the ISC XDMS A 440-1, a request handler document for state management of a social activity share request, and, when a delivery report is needed, the ISC server A 420-1 indicates its state by 'pending'. In other words, the ISC server A 420-1 changes the request handler document for maintaining the social activity share state and, when the delivery report is needed, the ISC server A 420-1 sets the state by 'pending'. An example of a schema for the request handler document is illustrated in Table 3.

In step 415, the ISC server A 420-1 transmits a social activity share request for ISC session contents transmitting, to the contents server 460 through HTTP POST. In other words, the ISC server A 420-1 forwards the ISC session contents by generating the HTTP POST for the contents server 460. An example of a body of the HTTP POST message for the social activity share request is illustrated in Table 5 as shown below.

**Table 5**

| |
|---|
| POST http://abccde.com:8080/∼joe/home.html HTTP/1.1 |
| Host xcap.example1.com |
| Content-Type: application/xdcp-document+xml; charset="utf-8" |
| Content-Length: (...) |
| <?xml version="1.0" encoding="UTF-8"?> |
| <xdcp-document xmlns="urn:oma:xml:xdm:xdcp-document"> |
| <request> |
| <forward> |
| <note>social activity share for Las Vegas meeting 20131121</note> |
| <delivery-report>true</delivery-report> |
| <request-id>cdcd3434</request-id> |
| <send-contents> |
| <primary-content>resource-lists/users/sip:joe@foo.com/pcontents</primary-content> |
| <associated-content>resource-lists/users/sip:joe@foo.com/acontents</associated-content> |
| </store-contents> |
| </forward> |
| </request> |
| </xdcp-document> |

An example of the body of the HTTP POST message for the social activity share request shown in Table 5 is similar to the example of the body of the SIP MESSAGE message shown in Table 4. Elements included in the body of the HTTP POST message shown in Table 5 are defined as follows.
<xdcp-document>: document for XML document management instruction.
<request>: XML document management request.
<note>: indicating that it is social activity share and herein indicating in a form 'social activity share for LasVegas meeting 20131121'.
<delivery-report>: request for reception of delivery result for a social activity share request ('true').
<request-id>: identifier of a social activity share request.
<send-contents>: send-contents for a social activity share request, and each can include primary content, associated content, and content viewing information. In the present embodiment, it indicates URI information of the primary content and the associated content.

In step 417, the contents server 460 receives the social activity share request from the ISC server A 420-1, properly stores the ISC session contents in a contents storage space, and notifies the reception-side ISC server B 420-2 of ISC session contents information. For example, the ISC session contents information is notified through a SIP NOTIFY message. That is, the contents server 460 forwards a reference of the ISC session contents by transmitting the SIP NOTIFY message. At this time, the contents server 460 includes the reference (e.g., URI information) of the ISC session contents within the contents storage space, thereby enabling the ISC server B 420-2 to get the corresponding contents based on the user preference. In accordance with another embodiment of the present invention, the contents server 460 properly stores the ISC session contents in the content storage space identically based on the HTTP POST received from the ISC server A 420-1, and then, transmits the social activity share request message (HTTP POST) including the ISC session contents reference information to the reception-side ISC server B 420-2.

In step 419, the ISC server B 420-2 having received the social activity share request confirms a user preference regarding ISC session contents reception of the ISC client B 410-2. That is, the ISC server B 420-2 confirms the user preference regarding whether to accept/receive/acknowledge/reject the reception of the ISC client B 410-2. The user preference may be one of accepting server change information after storing received data in a server, finally storing (confirming) in the server through a user's acceptance after temporarily storing in the server, and rejecting a corresponding social relation. The embodiment illustrated in FIG. 4 illustrates a case of 'accept'.

In step 421, based on the user preference of the ISC client B 410-2, the ISC server B 420-2 temporarily stores data included in the social activity share request in the ISC server B 420-2, or fetches the ISC session contents of the ISC client A 410-1 from the transmitting-side ISC server A 420-1 based on a document URI, stores the fetched ISC session contents in a reception-side ISC DB, and sets a contents delivery state as 'changed' (e.g., 'updated') in a place such as a list XDMS. As another example, if the user preference is 'acknowledge' (i.e., confirm), the ISC server B 420-2 notifies a user of the content of the ISC session contents, receives an acceptance of the ISC client B 410-2 in response to this, and gets and stores the corresponding contents from the transmitting-side ISC server A 420-1. Alternatively, like the 'accept' case, the ISC server B 420-2 fetches the corresponding contents from the transmitting-side ISC server A 420-1, temporarily stores the fetched contents, acknowledges the corresponding contents from the ISC client B 410-2, and stores the corresponding contents as formal data. As yet another example, if the user preference is 'reject', the ISC server B 420-2 transmits an error message to a transmitting side. The error message represents non-acceptance of a recipient.

In step 423, the ISC server B 420-2 transmits a contents change item of the ISC server A 420-1 to the ISC client B 410-2. For example, the ISC server B 420-2 transmits a change item of the ISC session contents through a SIP NOTIFY message. A user of the ISC client B 410-2 having received the content change item stores the contents within a user device. If contents synchronization between the ISC client B 410-2 and the ISC server B 420-2 is supported, the synchronization is carried out by the ISC server B 420-2.

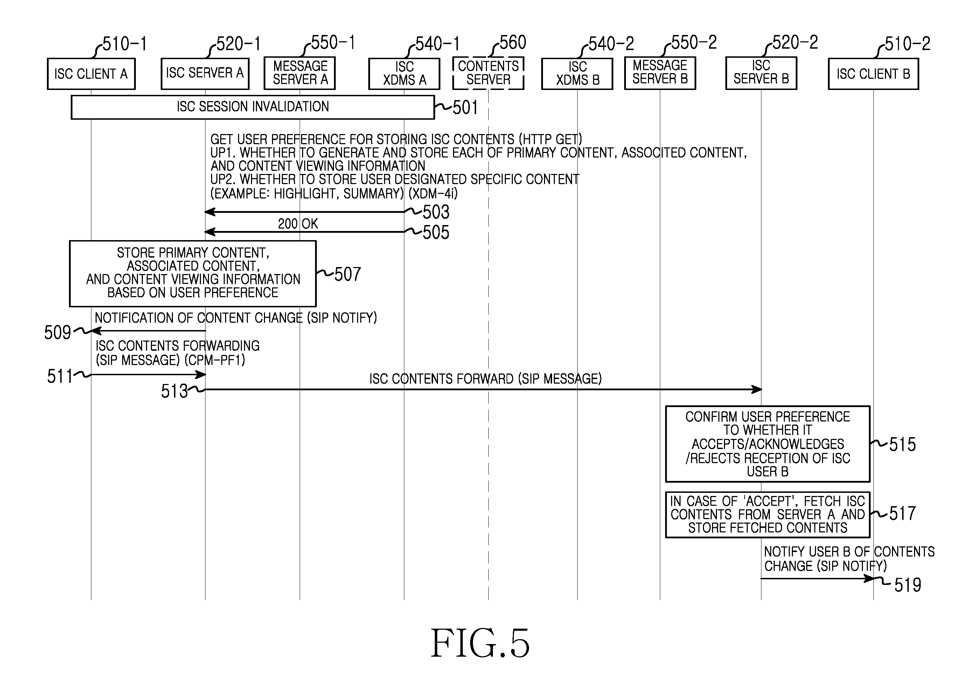

FIG. 5 illustrates a signal exchange for social activity management in a system providing a communication service according to yet another embodiment of the present invention.

Referring to FIG. 5, in step 501, an ISC session is invalidated.

After the ISC session invalidation, in step 503, an ISC server A 520-1 gets a user preference regarding whether to generate ISC session contents for conference-related context, from an ISC XDMS A 540-1. For example, the conference-related context includes conference schedule / opening information, participant information (e.g., acceptable personal information, join level information, main join field information, and the like), other conference related information, and the like. Additionally, when an ISC user sets a specific context requested by the user, for example, a detailed user preference regarding such as inspection/audience view (e.g., "zone A" view) that the user selects in an ISC session, the ISC server A 520-1 confirms the detailed user preference. An example of the user preference is recorded in a form of Table 2.

In step 505, the ISC server A 520-1 receives a 200 OK from the ISC XDMS A 540-1.

In step 507, the ISC server A 520-1 generates and stores ISC session contents based on the user preference. For example, the ISC session contents include at least one of primary contents, associated contents, and content viewing information. And, the ISC server A 520-1 sets a tag and a per-individual-content identifier (e.g., Unique Resource Identifier (URI)) that are recognition values for the generated ISC session contents. For example, the recognition value is set as 'social event 20111006 zone A'. In the embodiment of FIG. 5, a description has been made in which the ISC session contents are stored in the ISC server A 520-1. But, based on another embodiment of the present invention, the ISC session contents are stored in a message server A 550-1, the ISC XDMS A 540-1 or a contents server 560, not the ISC server A 520-1.

In step 509, the ISC server A 520-1 notifies an ISC client A 510-1 of a change (i.e., update) of the ISC session contents. For example, the ISC server A 520-1 notifies the change of the ISC session contents through a SIP NOTIFY message. For this, the ISC server A 520-1 transmits to the ISC client A 510-1 a reference (e.g., a URI) to the stored content of generated ISC session contents or the contents themselves. In accordance with this, the ISC client A 510-1 stores the reference to the contents or the contents themselves within a user device. Further, if contents synchronization between the ISC client A 510-1 and the ISC server A 520-1 is supported, the synchronization is carried out.

In step 511, the ISC client A 510-1 forwards the ISC session contents to other ISC users through a social activity share request. That is, the ISC client A 510-1 forwards the ISC session contents. The social activity share request is transmitted by the SIP MESSAGE message. A body of the SIP MESSAGE message may be constructed as in Table 4. However, unlike Table 4, a reception request URI of the SIP MESSAGE message is set by the transmitting-side ISC server A 520-1.

In step 513, the ISC server A 520-1 transmits a social activity share request for ISC session contents transmitting, to a recipient side. In other words, the ISC server A 520-1 forwards the ISC session contents. For this, a SIP MESSAGE message may be used. For example, the ISC server A 520-1 includes ISC session contents data of the ISC client A 510-1 directly in the social activity share request, or includes the ISC session contents data in an identifiable document URI form. Further, the recipient may generate the social activity share request in a similar form being in the same domain or a different domain. However, when the recipient is the same domain, unlike the embodiment of FIG. 5, a reception entity of a social activity transmit request is the recipient of the corresponding contents, not the counterpart ISC server A 520-1. An example of a SIP MESSAGE message body for the social activity share request is illustrated in Table 4.

In step 515, the ISC server B 520-2 having received the social activity share request confirms a user preference regarding ISC session contents reception of the ISC client B 510-2. That is, the ISC server B 520-2 confirms the user preference regarding whether to accept/receive/acknowledge/reject the reception of the ISC client B 510-2. The user preference may be one of accepting server change information after storing received data in a server, finally storing (confirming) in the server through a user's acceptance after temporarily storing in the server, and rejecting a corresponding social relation. The embodiment illustrated in FIG. 5 illustrates a case of 'accept'.

In step 517, based on the user preference of the ISC client B 510-2, the ISC server B 520-2 temporarily stores data included in the social activity share request in the ISC server B 520-2, or fetches the ISC session contents of the ISC client A 510-1 from the transmitting-side ISC server A 520-1 based on a document URI, stores the fetched ISC session contents in a reception-side ISC DB, and sets a contents delivery state as 'changed' (e.g., 'updated') in a place such as a list XDMS. As another example, if the user preference is 'acknowledge' (i.e., confirm), the ISC server B 520-2 notifies a user of the content of the ISC session contents, receives an acceptance of the ISC client B 510-2 in response to this, and gets and stores the corresponding contents from the transmitting-side ISC server A 520-1. Alternatively, like the 'accept' case, the ISC server B 520-2 fetches the corresponding contents from the transmitting-side ISC server A 520-1, temporarily stores the fetched contents, acknowledges the corresponding contents from the ISC client B 510-2, and stores the corresponding contents as formal data. As yet another example, if the user preference is 'reject', the ISC server B 520-2 transmits an error message to a transmitting side. The error message represents non-acceptance of a recipient.

In step 519, the ISC server B 520-2 transmits a contents change item of the ISC server A 520-1 to the ISC client B 510-2. For example, the ISC server B 520-2 transmits a change item of the ISC session contents through a SIP NOTIFY message. A user of the ISC client B 510-2 having received the content change item stores the contents within a user device. If contents synchronization between the ISC client B 510-2 and the ISC server B 520-2 is supported, the synchronization is carried out by the ISC server B 520-2. Further, if intending to transmit newly generated ISC session contents to the recipient who is the non-ISC user, not the ISC user, the ISC server A 520-1 transmits contents of the ISC client A 510-1 to the non-ISC recipient through a message form (e.g., an SMS, an MMS, an e-mail, and the like).

The embodiments described with reference to FIG. 3 to FIG. 5 illustrate a social activity share request between different domains. But, the aforementioned embodiments are similarly applicable even to the social activity share request within a single domain.

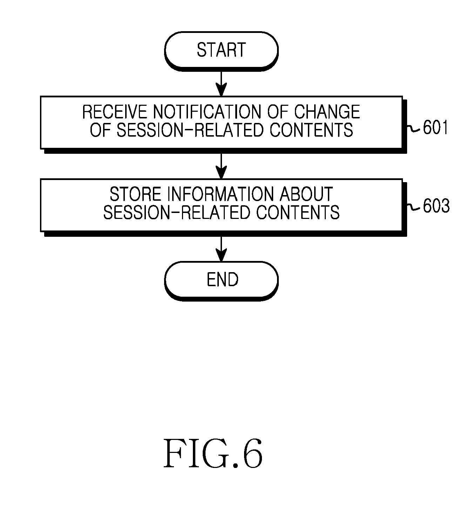

FIG. 6 illustrates an operation procedure of a user device in a system providing a communication service according to an embodiment of the present invention. The operation procedure illustrated in FIG. 6 is carried out by the user device 200 of FIG. 2. Also, the operation procedure illustrated in FIG. 6 may be carried out by the ISC client A 310-1 of FIG. 3, the ISC client A 410-1 of FIG. 4, and the ISC client A 510-1 of FIG. 5.

Referring to FIG. 6, in step 601, the user device receives a notification of change of session-related contents. For example, the session-related contents include at least one of conference schedule / opening information, participant information (e.g., acceptable personal information, join level information, main join field information, and the like), and other conference related information.

Next, the user device proceeds to step 603 and stores information about the session-related contents. The information about the session-related contents includes at least one of contents themselves or reference information accessible to the contents. For example, the reference information includes a URI. At this time, the user device may further perform a contents synchronization procedure with a server based on an embodiment of the present invention.

After that, though not illustrated in FIG. 6, the user device may request sharing of the session-related contents. For this, the user device may transmit a SIP MESSAGE message. At this time, the SIP MESSAGE message may be constructed like Table 4. However, unlike Table 4 above, a reception request URI of the SIP MESSAGE message is set to a transmitting-side server.

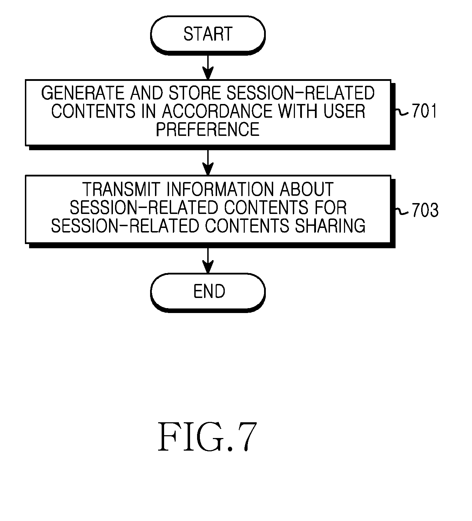

FIG. 7 illustrates an operation procedure of a transmission-side server in a system providing a communication service according to an embodiment of the present invention. The operation procedure illustrated in FIG. 7 may be carried out by the ISC server 220 of FIG. 2. Also, the operation procedure illustrated in FIG. 7 may be performed by the ISC server A 320-1 of FIG. 3, the ISC server A 420-1 of FIG. 4, and the ISC server A 520-1 of FIG. 5.

Referring to FIG. 7, in step 701, the server generates and stores session-related contents based on a user preference. That is, if the user preference indicates to generate the session-related contents, the server generates the session-related contents. The user preference has been stored in a document management server. Accordingly, the server requests information about the user preference to the document management server, and gets the information about the user preference. At this time, the server may generate the session-related contents within a range designated in the user preference. For example, the information about the user preference may be constructed as in Table 2.

In step 703, the server transmits the information about the session-related contents for sharing of the session-related contents. The information about the session-related contents may include at least one of contents themselves or reference information accessible to the contents. For example, the reference information includes a URI. In accordance with an embodiment of the present invention, the information about the session-related contents is transmitted to a contents server, or is transmitted to a server of a domain which other users sharing the contents belong to. In accordance with an embodiment of the present invention, the server determines whether to transmit the information about the session-related contents and a range of other users sharing the contents based on a user preference regarding whether to share. For this, the server requests the information about the user preference to the document management server, and gets the information about the user preference. In accordance with another embodiment of the present invention, the server determines whether to transmit the information about the session-related contents and the range of other users sharing the contents based on the user's request.

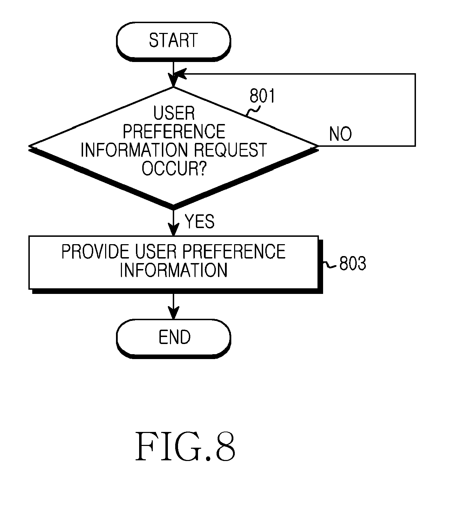

FIG. 8 illustrates a procedure of a document management server in a system providing a communication service according to an embodiment of the present invention. The operation procedure illustrated in FIG. 8 may be carried out by the ISC XDMS 240 of FIG. 2. Also, the operation procedure illustrated in FIG. 8 may be carried out by the ISC XDMS A 340-1 of FIG. 3, the ISC XDMS A 440-1 of FIG. 4, and the ISC XDMS A 540-1 of FIG. 5.

Referring to FIG. 8, in step 801, the document management server determines whether a request for information about a user preference occurs. That is, the document management server, which stores and manages predefined information about a user preference, receives a request for information about a user preference. The information about the user preference may be requested by a server controlling a communication service, and may be requested after session invalidation.

If the request for the information about the user preference is generated, the document management server provides the information about the user preference in step 803. For example, the information about the user preference may be constructed as in Table 2.

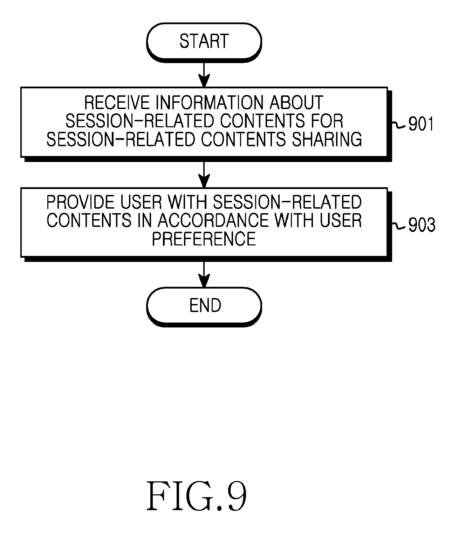

FIG. 9 illustrates an operation procedure of a reception-side server in a system providing a communication service according to an embodiment of the present invention. The operation procedure illustrated in FIG. 9 may be carried out by the ISC server 220 of FIG. 2. Also, the operation procedure illustrated in FIG. 9 may be carried out by the ISC server B 320-2 of FIG. 3, the ISC server B 420-2 of FIG. 4, and the ISC server B 520-2 of FIG. 5.

Referring to FIG. 9, in step 901, the server receives information about session-related contents for sharing of the session-related contents. The information about the session-related contents may include at least one of contents themselves or reference information accessible to the contents. For example, the reference information includes a URI. In accordance with an embodiment of the present invention, the information about the session-related contents may be received from a transmission-side server generating the session-related contents, or be provided from a contents server.

In step 903, the server processes or provides the session-related contents to a user based on a user preference. The user includes a user who is to be shared with the session-related contents. That is, the server gets the information about the user preference of the user, and confirms setting for sharing indicated by the user preference. For example, the setting for the sharing includes one of 'accept', 'acknowledge', and 'reject'. In a case of 'accept', the server notifies the user of a change of the session-related contents after storing the session-related contents. In a case of 'acknowledge', the server inquires of the user about whether to receive the session-related contents, and, at the time of 'accept', the server notifies a change of the session-related contents. In a case of 'reject', the server notifies the transmission-side server of non-acceptance of a recipient.

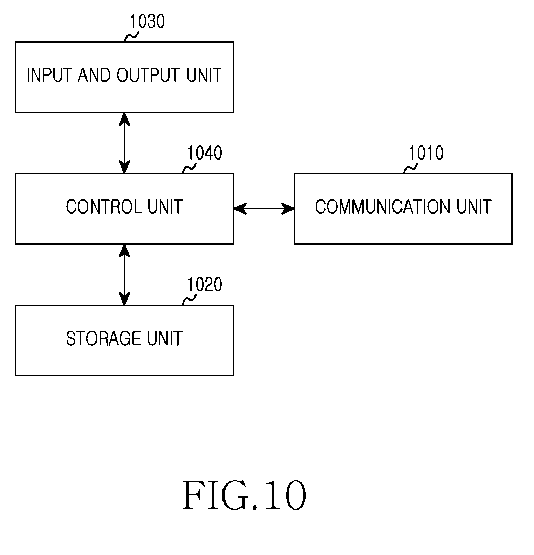

FIG. 10 illustrates a block configuration of a user device providing a communication service according to an embodiment of the present invention. The user device illustrated in FIG. 10 may correspond to the user device 200 of FIG. 2. Also, the block construction illustrated in FIG. 10 may be applied to implement the ISC clients 310-1 and 310-2 of FIG. 3, the ISC clients 410-1 and 410-2 of FIG. 4, and the ISC clients 510-1 and 520-2 of FIG. 5.

Referring to FIG. 10, the user device includes a communication unit 1010 a storage unit 1020, an input and output unit 1030, and a control unit 1040.

The communication unit 1010 provides an interface for communication with other objects. The communication unit 1010 provides an interface for wireless communication or wired communication. For this, the communication unit 1010 performs a conversion function between a physical signal and a bit stream based on a physical layer standard of a system. If providing the interface for wireless communication, the communication unit 1010 may include a Radio Frequency (RF) module for transmitting/receiving a signal through a wireless channel such as signal band conversion, amplification, and the like, and at least one antenna. In this case, the communication unit 1010 may include a transmission filter, a reception filter, an amplifier, a mixer, an oscillator, a Digital to Analog Converter (DAC), an Analog to Digital Converter (ADC), and the like.

The storage unit 1020 stores data of a basic program for an operation of the user device, an application program, setting information, and the like. Particularly, the storage unit 1020 stores an application for a communication service and setting information related to the communication service. Further, the storage unit 1020 stores session-related contents of the communication service. For example, the session-related contents include at least one of a message transmitted/received through the communication session, a file, conference schedule/opening information, participant information (e.g., acceptable personal information, join level information, main join field information, and the like), and other conference related information. And, the storage unit 1020 provides stored data based on a request of the control unit 1030.

The input and output unit 1030 provides an interface for interaction with a user. For example, for input, the input and output unit 1030 includes at least one key, at least one sensor, at least one camera module, and the like. Also, for output, the input and output unit 1030 includes at least one display means. The display means may include at least one of a Liquid Crystal Display (LCD), a Light Emitting Diode (LED), a Light Polymer Display (LPD), an Organic Light Emitting Diode (OLED), an Active Matrix Organic Light Emitting Diode (AMOLED), and a Flexible LED (FLED). Also, the input and output unit 1030 may include a touch screen. In FIG. 10, the input and output unit 1030 is illustrated as one block, but may be divided into an input unit for input and an output unit for output based on another embodiment of the present invention.

The control unit 1040 controls general operations of the user device. For example, the control unit 1040 transmits/receives a signal through the communication unit 1010. Also, the control unit 1040 records data in the storage unit 1020 and reads. Further, the control unit 1040 interprets a user's instruction inputted through the input and output unit 1030, and performs corresponding processing. For this, the control unit 1040 may include at least one processor. In accordance with an embodiment of the present invention, the control unit 1040 manages session-related contents information about a social activity. For example, the control unit 1040 controls the user device to operate like the clients illustrated in FIG. 3, FIG. 4, and FIG. 6. Also, the control unit 1040 controls the user device to perform the procedure illustrated in FIG. 6. An operation of the control unit 1040 according to an embodiment of the present invention is given as follows.

The control unit 1040 receives a notification of change of session-related contents through the communication unit 1010. For example, the session-related contents may include at least one of conference schedule / opening information, participant information (e.g. acceptable personal information, join level information, main join field information, and the like), other conference related information. And, the control unit 1040 stores information about the session-related contents in the storage unit 1020. The information about the session-related contents may include at least one of contents themselves or reference information accessible to the contents. For example, the reference information includes a URI. At this time, the control unit 1040 performs a content synchronization procedure with a server based on an embodiment of the present invention. Further, the control unit 1040 requests sharing of the session-related contents based on an embodiment of the present invention. For this, the control unit 1040 transmits a SIP MESSAGE message to a server through the communication unit 1010.

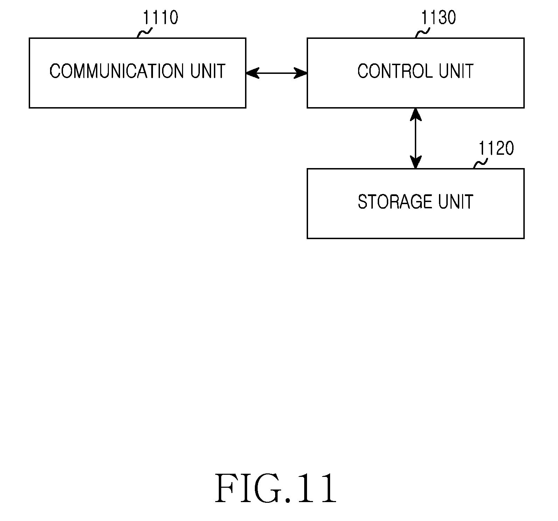

FIG. 11 illustrates a block configuration of a server in a system providing a communication service according to an embodiment of the present invention. The block construction illustrated in FIG. 11 may be applied to implement at least one of the ISC server 220, the ISC XDMS 240, and the supporting server 250 of FIG. 2. For example, the ISC server 220, the ISC XDMS 240, and the supporting server 250 are each constructed like the device illustrated in FIG. 11. Alternatively, two or more of the ISC server 220, the ISC XDMS 240, and the supporting server 250 are constructed as one device illustrated in FIG. 11. In this case, the ISC server 220, the ISC XDMS 240, and the supporting server 250 may be each constructed as one board.

Referring to FIG. 11, the server includes a communication unit 1110, a storage unit 1120, and a control unit 1130.

The communication unit 1110 provides an interface for communication with other objects. The communication unit 1110 provides an interface for wireless communication or wired communication. For this, the communication unit 1110 performs a conversion function between a physical signal and a bit stream based on a physical layer standard of a system.

The storage unit 1120 stores data of a basic program for an operation of the server, an application program, setting information, and the like. Particularly, the storage unit 1120 stores an application for a communication service and setting information related to the communication service. And, the storage unit 1120 provides stored data based on a request of the control unit 1130.

The control unit 1130 controls general operations of the server. For example, the control unit 1130 transmits/receives a signal through the communication unit 1110. Also, the control unit 1130 records data in the storage unit 1120 and reads the data from the storage unit 1120. For this, the control unit 1130 may include at least one processor. In accordance with an embodiment of the present invention, the control unit 1130 manages session-related contents information about a social activity. For example, the control unit 1130 controls the server to operate like at least one of an ISC server and an ISC XDMS illustrated in FIG. 3, FIG. 4, and FIG. 6. Also, the control unit 1130 controls the server to operate like FIG. 7, FIG. 8, and FIG. 9. An operation of the control unit 1130 according to an embodiment of the present invention is given as follows.

If the server is a transmission-side server, the control unit 1130 generates session-related contents based on a user preference, and stores the generated session-related contents in the storage unit 1120. For this, the control unit 1130 requests information about the user preference to a document management server, and gets the information about the user preference. And, the control unit 1130 transmits the information about the session-related contents for sharing of the session-related contents through the communication unit 1110. The information about the session-related contents may include at least one of contents themselves or reference information accessible to the contents. In accordance with an embodiment of the present invention, the information about the session-related contents is transmitted to a contents server, or is transmitted to a reception-side server of a domain which other users sharing the contents belongs to. In accordance with an embodiment of the present invention, the control unit 1130 determines whether to transmit the information about the session-related contents based on the user preference regarding whether to share and a range of other users sharing the contents. In accordance with another embodiment of the present invention, the control unit 1130 determines whether to transmit the information about the session-related contents based on a request of the user and the range of other users sharing the contents.

If the server is a reception-side server, the control unit 1130 receives information about session-related contents for sharing of the session-related contents through the communication unit 1010. The information about the session-related contents may include at least one of contents themselves or reference information accessible to the contents. In accordance with an embodiment of the present invention, the information about the session-related contents is received from a transmission-side server generating the session-related contents, or is provided from a contents server. Also, the control unit 1130 provides the session-related contents to a user based on a user preference. That is, the control unit 1130 gets the information about the user preference of the user, and confirms setting for sharing indicated by the user preference. In a case of 'accept', the control unit 1130 notifies the user of a change of the session-related contents after storing the session-related contents. In a case of 'acknowledge', the control unit 1130 inquires whether to receive the session-related contents to the user, and then, at the time of accept, the control unit 1130 notifies a change of the session-related contents. In a case of 'reject', the control unit 1130 notifies the transmission-side server of non-acceptance of a recipient.

If the server is a document management server, the control unit 1130 determines if a request for information about a user preference is generated. That is, the control unit 1130 stores and manages predefined information about a user preference in the storage unit 1120. The information about the user preference may be requested by a server controlling a communication service, and may be requested after session invalidation. If the request for the information about the user preference is generated, the control unit 1130 provides the information about the user preference.

An embodiment of the present invention provides a method for managing communication joined by an ISC user and contents related to a content viewing session based on a user preference in a communication service, thereby being able to provide a smoother social user experience to the user.

Embodiments of the present invention according to the claims and description in the specification can be realized in the form of hardware, software or a combination of hardware and software.

Such software may be stored in a computer readable storage medium. The computer readable storage medium stores one or more programs (software modules), the one or more programs comprising instructions, which when executed by one or more processors in an electronic device, cause the electronic device to perform methods of the present invention.

Such software may be stored in the form of volatile or non-volatile storage such as, for example, a storage device like a Read Only Memory (ROM), whether erasable or rewritable or not, or in the form of memory such as, for example, Random Access Memory (RAM), memory chips, device or integrated circuits or on an optically or magnetically readable medium such as, for example, a Compact Disc (CD), Digital Video Disc (DVD), magnetic disk or magnetic tape or the like. It will be appreciated that the storage devices and storage media are embodiments of machine-readable storage that are suitable for storing a program or programs comprising instructions that, when executed, implement embodiments of the present invention. Embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

In the aforementioned embodiments of the present invention, constituent elements included in the invention have been expressed in the singular number or the plural number based on the proposed embodiments. But, the expression of the singular number or plural number is merely selected to be suitable to a proposed situation for description convenience. The present invention is not limited to singular or plural constituent elements, and the constituent elements expressed in the plural number can be constructed in the singular number, or the constituent elements expressed in the singular number can be constructed in the plural number.

While the invention has been shown and described with reference to certain embodiments thereof, it will be understood by those skilled in the art that various changes in form and details may be made therein without departing from the spirit and scope of the invention as defined by the appended claims and their equivalents.

## Claims

1. A method for operating a user device in a communication system, the method comprising:
receiving a notification of an update of session-related contents from a server; and
storing information about the session-related contents,
wherein the notification is provided by a user preference of the user device.

2. The method of claim 1, wherein the session-related contents comprise at least one of a message transmitted/received through a communication session, a file, conference schedule/opening information, participant information, and reference information for accessing contents.

3. The method of claim 1, further comprising:
transmitting a message of requesting sharing of the session-related contents.

4. A method for operating a server in a wireless communication system, the method comprising:
generating session-related contents based on a user preference of a first user; and
transmitting information about the session-related contents in order to share the session-related contents with a second user.

5. The method of claim 4, further comprising:
receiving information about the user preference from a document management server.

6. The method of claim 4, further comprising:
determining at least one of a range of contents to be generated and a range of other users sharing the contents based on information about the user preference.

7. The method of claim 4, wherein transmitting the information about the session-related contents comprises transmitting the information about the session-related contents to a contents server or a server of a domain which other users sharing contents belong to.

8. The method of claim 4, further comprising:
determining whether to transmit the information about the session-related contents, based on information about the user preference or a request of the first user.

9. A method for operating a server in a wireless communication system, the method comprising:
receiving a request for information about a user preference; and
providing the information about the user preference,
wherein the information about the user preference instructs at least one of whether to generate session-related contents of a user, whether to share the session-related contents, and a target for sharing the session-related contents.

10. The method of claim 9, wherein the information about the user preference is implemented as an extensible Markup Language (XML) document.

11. A method for operating a server in a wireless communication system, the method comprising:
receiving information about session-related contents of a first user in order to share the session-related contents of the first user with a second user; and
processing the information about the session-related contents of the first user based on a user preference of the second user.

12. The method of claim 11, wherein the processing the information about the session-related contents comprises:
if setting for sharing instructed by the user preference of the second user is 'accept', storing the session-related contents of the first user; and
transmitting, to the second user, a notification of a change of the session-related contents of the first user.

13. The method of claim 11, wherein the processing the information about the session-related contents comprises:
if setting for sharing instructed by the user preference of the second user is 'acknowledge', transmitting, to the second user, a message of inquiring whether to receive the session-related contents of the first user;
if the second user accepts to receive the session-related contents of the first user, storing the session-related contents of the first user; and
transmitting, to the second user, a notification of change of the session-related contents of the first user.

14. The method of claim 11, wherein processing the information about the session-related contents comprises, if setting for sharing instructed by the user preference of the second user is 'reject', transmitting a notification of non-acceptance to a server providing the session-related contents of the first user.

15. An apparatus arranged to implement a method of one of claims 1 to 14.
